# EUROPEAN PATENT APPLICATION

(11) **EP 2 381 565 A1**
(43) Date of publication of application: **26.10.2011**
(21) Application number: 10160536.8
(22) Date of filing: 21.04.2010
(51) Int. Cl.: H02K 19/24, H02K 35/06

(54) **Power generator with high power-to-volume ratio**

(71) Applicant: Houly Co., Ltd., Taipei (TW)
(72) Inventor: Liu, Kuo-Shen, Cambridge, CB1 1AH (GB)
(74) Representative: Horak, Michael

(57) **Abstract**

A power generator with high power-to-volume ratio includes a plurality of silicon steel plates and air gaps or plastic plates, which are alternately arranged to form adjacent magnetic paths of a stator and a mover or a rotor of a power generator and which have intervals (which are defined by thickness or width of the silicon steel plates or the air gaps or the plastic plates) that are set to be very small, whereby when the mover or the rotor take a movement or rotation by one interval, magnetic flux induced in a magnetic path of the stator around which an induction coil is wound changes magnitude and direction thereof so that through quick changes, the induction coil induces a higher voltage and thus significantly increases power-to-volume ratio of the generator.

## Description

### (a) Technical Field of the Invention

The present invention generally relates to a power generator with high power-to-volume ratio, and more particularly to a power generator with high power-to-volume ratio that makes fast change of the magnitude and direction of magnetic flux in a magnetic path in order to induce a higher voltage in an induction coil of a stationary magnetic path (namely a stator) so that the power generator can significantly increases the capacity of output power when compared to a conventional power generator of the same volume with a movable magnetic path, which is a mover or a rotor, moving in the same moving speed or rotational speed.

### (b) Description of the Prior Art

A power generator employs an operation principle originating from a natural phenomenon, which shows that a conductor moving in a magnetic field may generate an induction voltage by following the formula: E=NBℓV, where E is electrical voltage, B is magnetic flux density, ℓ is the length of the conductor, V is the moving speed, and N is the number of turns of a coil. Another rule is that a stationary conductor induces an induction voltage when wound in a changing magnetic field, of which a formula can be derived from the previous formula: E=NBℓV=NBℓS/t=NBA/t=Nϕ/t=Ndϕ/dt, where S is distance, t is time, A is area of the magnetic path, ϕ is magnetic flux, and dϕ/dt indicates change of flux in unit time.

The power induced by either a moving conductor or a changing magnetic field is generated through a prime mover. According to the formulas, the voltage is in inversed proportion to the time t and in proportion to turns N and BA. Since silicon steel plates will get saturated B, which can be around 1-2 tesla and cannot get greater. The area A is related to the volume of the generator so that an increase of A means an increase of the volume. The increase of the turns N of the coil also results in an increase of the volume.

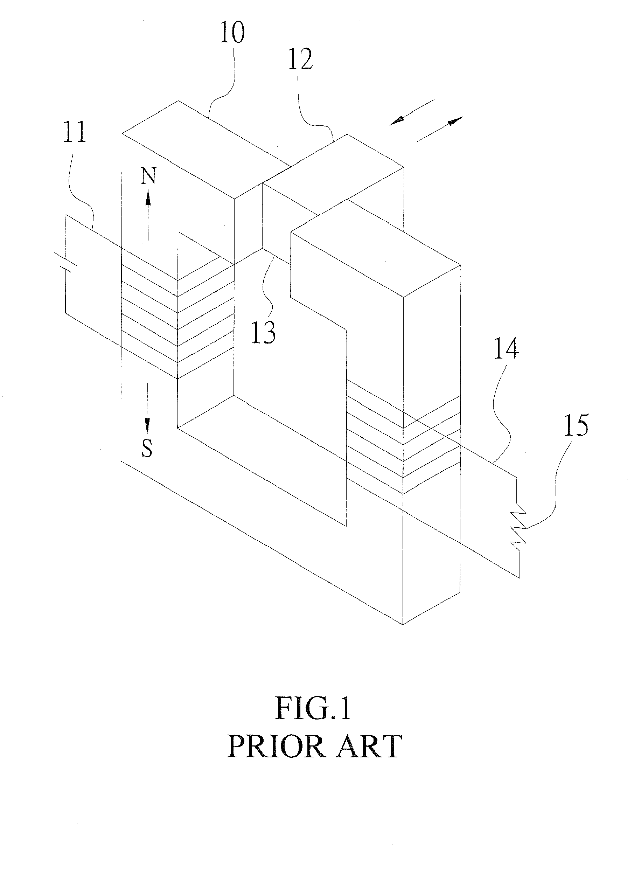

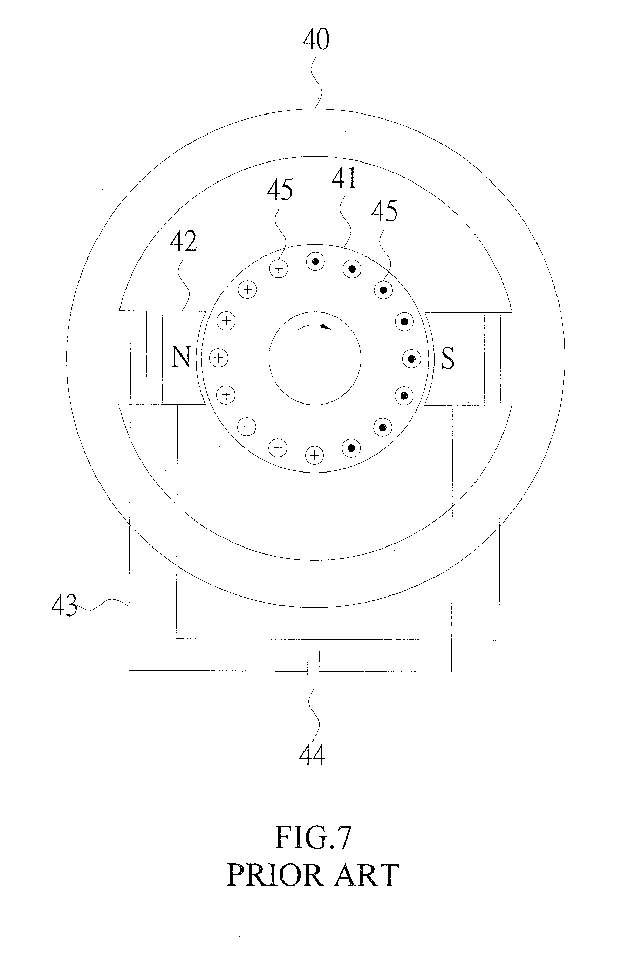

The true power output by a generator follows the rule P=E²/R_{L}, where R_{L} is the electrical resistance of a load, which must be far more than an internal resistance of the coil and Hence it may get increased in proportion with the internal resistance. However, the internal resistance is proportional to the number of turns N of the coil, so that a large number of turns provide a high voltage, but at the same time increases R_{L}, leading to a reduction of P. Thus, for the same generator volume, to increase the power of the generator, namely increasing the power-to-volume ratio, the best way is to shorten the time period t by which the magnetic flux changes, meaning the magnetic flux must be changed very rapidly. The power generator has been produced for more than one century, the theory and technology of the power generator got mature before half a century and in other words, they have not been significantly improved for almost fifty years. The conventional linear alternator is shown in FIG. 1 of the attached drawings and a rotary generator is shown in FIG. 7; they both are subjected to certain limitations in shortening the time period t by which the magnetic flux changes, which will be further described.

Increasing the power-to-volume ratio of a power generator can reduce the cost and is of vital importance for low speed prime mover, such as large scale wind turbine and wave power turbine. The currently available large scale wind turbines, when combined with a direct drive power generator, will become bulky and expensive. Since the time period t is in inverse proportion to the rotational speed, most of the wind turbines are provided with a gear box to increase the rotational speed for mating a synchronous generator or an induction generator to generate electrical power. However, the gear box is generally very heavy and expensive and this is one of the reasons that the cost of wind power generator cannot compete with the traditional power generation. Sea wave power generation is for the time being not put into practical commercial operation due to lacking of available linear motion generator of sufficient efficiency. As to a Stirling engine that is fit for solar power generation, it also suffers bulkiness of linear power generator and is thus impractical.

Generators with high power-to-volume ratio find wide applications in various fields. For example, automobiles are equipped with an increasing number of electronic apparatus and further hybrid automobiles need an increase of the power of a generator. Due to the limited space inside an automobile, it is of extremely need for the automobile to increase the power-to-volume ratio of power generators.

### SUMMARY OF THE INVENTION

The primary objective of the present invention is to provide a power generator with high power-to-volume ratio, whereby with the same moving speed or rotational speed of prime mover, the generator of the present invention can provide a much greater power output per unit volume than the conventional power generators.

The previously mentioned power generator with high power-to-volume ratio is constructed by alternately arranging a plurality of silicon steel plates and air gaps or plastic plates in adjacent magnetic paths of a stator and a mover or a rotor, whereby when the mover or rotor takes a movement by an interval (which corresponds to the thickness of width of the silicon steel plates or the air gaps or the plastic pads), the silicon steel plates of the stator and the silicon steel plates of the mover or rotor are set into alignment with each other or are shifted away from each other once. In alignment, the magnetic flux of the whole magnetic path increases, while in the condition of being shifted away, the magnetic flux decreases. According to the formula: E=N·dϕ/dt, the variation of magnetic flux induces an output of voltage in a winding on the stator, thereby supplying electrical power to the load. Since each of the silicon steel plates and the air gaps or the plastic plates have approximately the same thickness or width, which is of a very small dimension, and since dt is the time period by which the mover or rotor moves an interval, a small value of dt will result in a large induced voltage E and the power output P will be significantly increased.

In the previously mentioned power generator with high power-to-volume ratio, by combining two magnetic paths having lines of magnetic flux (magneto motive - force) in opposite directions, when the magnetic fluxes thereof simultaneously pass through an induction coil, one showing an increase in magnetic flux, while the other showing a decrease of magnetic flux, the magnetic flux in the magnetic path of the coil of the stator shows change in the magnitude of the magnetic flux, and also make a change of the direction thereof. Each time the mover or the rotor takes a movement of an interval, the magnetic flux in the magnetic path changes the direction from positive to negative or from negative to the positive.

The previously mentioned power generator with high power-to-volume ratio can be constructed as a linear power generator or a rotary power generator or in a single-phase or three-phase configuration.

In the previously mentioned power generator with high power-to-volume ratio, the magnetic flux in the magnetic path can be generated by a permanent magnet or through external excitation or self-excitation, or alternatively, a combination of permanent magnet and self-excitation, or combined excitation of self-excitation and external excitation can be adopted. The permanent magnet is embedded in the silicon steel plates of stator. The external excitation is provided by supplying an external DC power through an excitation coil to generate magnetic flux. The self-excitation is realized through generation of power by the residual magnetism, in the stator and then is subjected to rectification of output power to supply a direct current to an excitation coil to generate more magnetic flux. The combination of permanent magnet and self-excitation is to generate power with the magnetic flux of the permanent magnet and then inducing self-excitation to generate an even greater magnitude of magnetic flux. The combination of external excitation and self-excitation is to use an external DC power source to carry out magnetic excitation and thus applying the self-excitation to generate a great magnetic flux. Both circuits must be added with a diode to prevent shorting.

In the previously mentioned power generator with high power-to-volume ratio, the silicon steel plates can be replaced by other materials of high magnetic permeability and the plastic plates can be replaced by other materials of low magnetic permeability. The silicon steel plates are formed by stacking multiple this sheets in order to reduce eddy current loss.

In the previously mentioned power generator with high power-to-volume ratio, the mover or the rotor carries no coil, conductor, or permanent magnet thereon. This is on the contrary to the known synchronous generators, induction generators, and direct current generators, of which the rotor carries a coil, conductor, or permanent magnet. As a result, the present invention is easy to manufacture and is structurally tough. Increasing the power-to-volume ratio means reduces the consumption of material, so that the present invention can reduce cost as compared to the conventional power generators.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 shows the structure of a conventional linear mover generator.
FIG. 2 is a perspective view of the present invention as applied to a square linear mover generator.
FIG. 3A is a front view of FIG. 2.
FIG. 3B is a front view showing the mover of FIG. 3A moves by an interval.
FIG. 4 is a plot showing the variation of magnetic flux.
FIG. 5 illustrates plastic pates of the mover are replaced by gaskets or pads.
FIG. 6 illustrates the stator and the mover of FIG. 2 are modified in a circular form.
FIG. 7 shows the structure of a conventional rotary generator.
FIG. 8A is a front view of the present invention as applied to a rotary generator.
FIG. 8B is a front view showing the rotor of FIG. 8A rotates by an interval.
FIG. 9 is a front view showing coils are further wound around air gaps.
FIG. 10 is a schematic side elevational view showing the present invention applied to a three-phase rotary generator.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

Referring to FIG. 1, the structure of a conventional linear mover generator is shown. As shown, a stator 10 is made for example silicon steel plates that usually using in transformer. An exciter 11 comprises a direct current (DC) power source and a winding to generate magnetic flux (ϕ) that induces a north (N) pole and a south (S) pole in the stator 10. Alternatively, a permanent magnet can be instead or combined with the stator 10 to generate magnetic flux in the stator 10. A mover 12 is allowed to do reciprocal movement in a direction perpendicular to the stator 10. When the mover 12 takes reciprocal movement as indicated by the arrows, an air gap 13 is formed in the stator 10 to cut off a magnetic path of the stator 10 and the magnetic flux ϕ induced inside the stator 10 varies. According to the formula mentioned above, a voltage E is then induced in an induction coil 14 and electrical power P is generated and supplied to a load 15 (R_{L}). The load 15 can be of any form, such as an electrical resistor, an inductive load (such as a transformer or a motor), or a capacitive load.

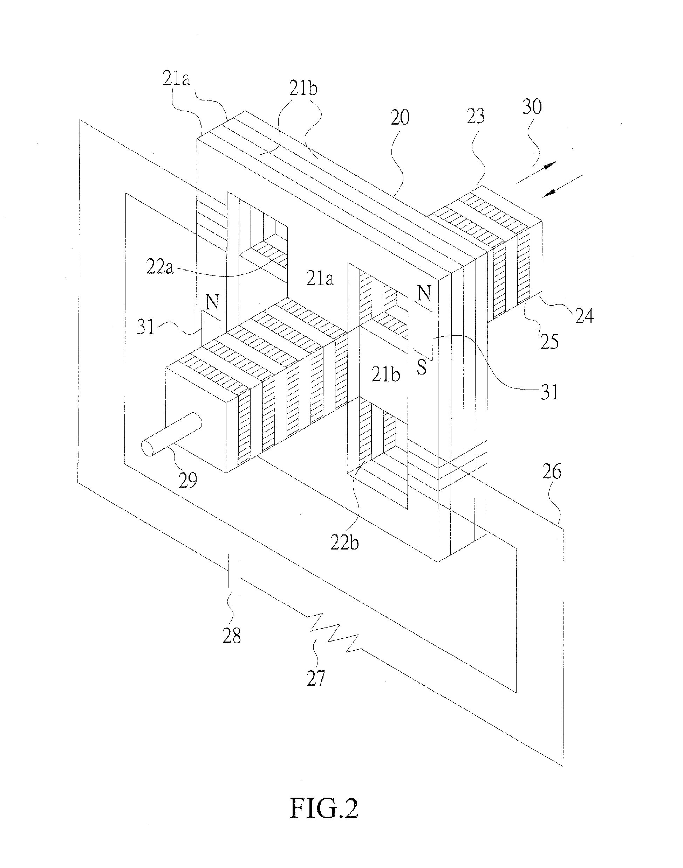

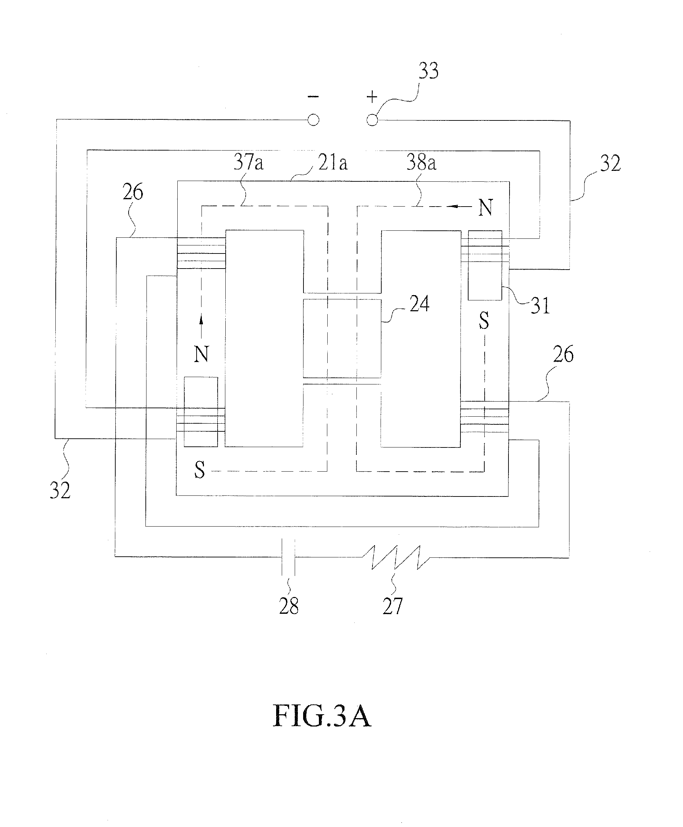

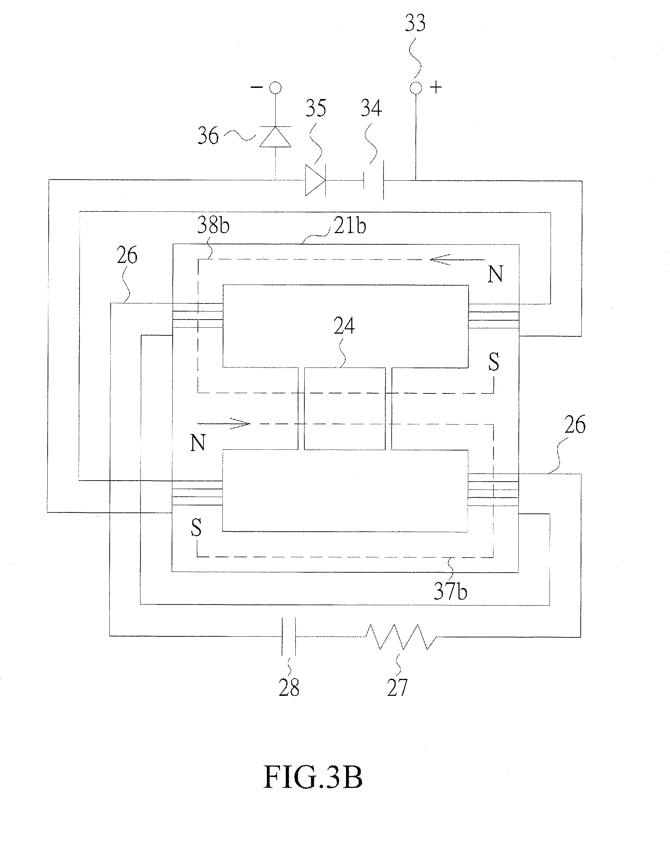

Reference is now made to FIGS. 2, 3A, and 3B, which are, respectively, a perspective view and a front view of the present invention as applied to a square linear mover generator and another front view showing the mover moves by an interval are shown. As shown in FIG. 2, a stator 20 comprises stator silicon steel plates 21a, 21b, each being arranged in two sets. As mentioned previously, each silicon steel plate set consists of a plurality of identical thin silicon steel plates stacked together. As shown in FIG. 3A, a front view of the stator silicon steel plates 21a that include the first and third sets of silicon steel plates is given; and in FIG. 3B, a front view of the stator silicon steel plates 21b that include he second and fourth sets of silicon steel plates is shown. A comparison between these two drawings shows the difference therebetween is that the stator silicon steel plates 21a form projections that extend in a vertical direction, while the stator silicon steel plates 21b form projections that extend in a horizontal direction. The stator silicon steel plates 21a and the stator silicon steel plates 21b are actually identical to each other and they are angularly shifted by 90 degrees when shown in FIG. 2. The stator 20 so constructed forms air gaps 22a, 22b

(namely the shading portions) therein. Further, induction coils 26, a load 27, and a capacitor 28, which is provided for compensation of inductive reactance induced by the induction coils 26 to improve power factor, are included in such an arrangement. And, a shaft 29 is provided for linear reciprocal motion of which the moving directions 30 are indicated by arrows.

Referring to FIG. 3A, permanent magnets 31 that are embedded in the stator 20 are further combined with excitation coils 32, which are connected to a self-excitation circuit 33. Or alternatively, it is feasible to only adopt self-excitation. In FIG. 3B, an external-excitation power source 34 is instead provided to combine with the self-excitation circuit 33; or alternatively, only the self-excitation is adopted. The self-excitation circuit is connected to a DC power source that is supplied, in a rectified form, from the output power. Diodes 35, 36 are provided to prevent shorting between the self-excitation and external-excitation power source.

Referring to FIG. 2, a mover 23 is composed of a plurality of mover silicon steel plates 24 and plastic plates 25 (namely the shading portions). The mover silicon steel plates 24 have the same thickness as the stator silicon steel plates 21a, 21b, and the projections of the stator silicon steel plates 21a are shown in alignment with the mover silicon steel plates 24, while the projections of the stator silicon steel plates 21b are shown in alignment with the plastic plates 25. Consequently, as shown in FIG. 3A, the stator silicon steel plates 21a have a large magnetic flux and the stator silicon steel plates 21b exhibit a small magnetic flux, of which the directions 37a, 38a of the magnetic fluxes (lines of magneto motive - force) are indicated by dotted lines shown in FIG. 3A. It can be observed from the drawing that the lines of magnetic flux are of opposite directions, wherein the magnetic flux direction 37a is shown clockwise, while the magnetic flux direction 38a is counterclockwise.

When the mover 23 moves by an interval corresponding to one stator silicon steel plate 21a or mover silicon steel plate 24, the situation shown in FIG. 3B results, where the stator silicon steel plates 21b are in alignment with the mover silicon steel plates 24, while the stator silicon steel plates 21a are shifted away from the mover silicon steel plates24. Under this condition, the stator silicon steel plates 21b show a large magnetic flux, while the stator silicon steel plates 21a possess only a small magnetic flux. Consequently, the magnetic fluxes show directions 37b, 38b as indicated in FIG. 3B, where the directions of the lines of magnetic flux of the two are opposite. A comparison between the magnetic flux directions 37a, 38a of FIG. 3A and the magnetic flux directions 37b, 38b of FIG. 3B reveals that the direction of the magnet flux passing through the induction coils 26 is changed to the opposite side, meaning variation of magnetic flux is induced. Consequently, the induction coils 26 induce a voltage that supplies electrical power to the load 27.

In FIG. 2, only four sets of stator silicon steel plates are shown. However, in fact, since the interval (namely the thickness of the stator silicon steel plates 21a, 21b or the mover silicon steel plates 24 or the plastic plates 25) is small, the stator 20 can be composed a great number of sets of silicon steel plates. For example, under the assumption that the interval is 0.3cm, for a moving distance of 3cm for each moving stroke of the mover 23, the magnetic flux changes 10 times for each moving stroke. On the other hand, the conventional linear generator as shown in FIG. 1 only makes change once. As a consequence, the induced voltages between the two differ by 10 times and the output powers are different by 100 times, meaning the power-to-volume ratio is increased by approximately 100 times.

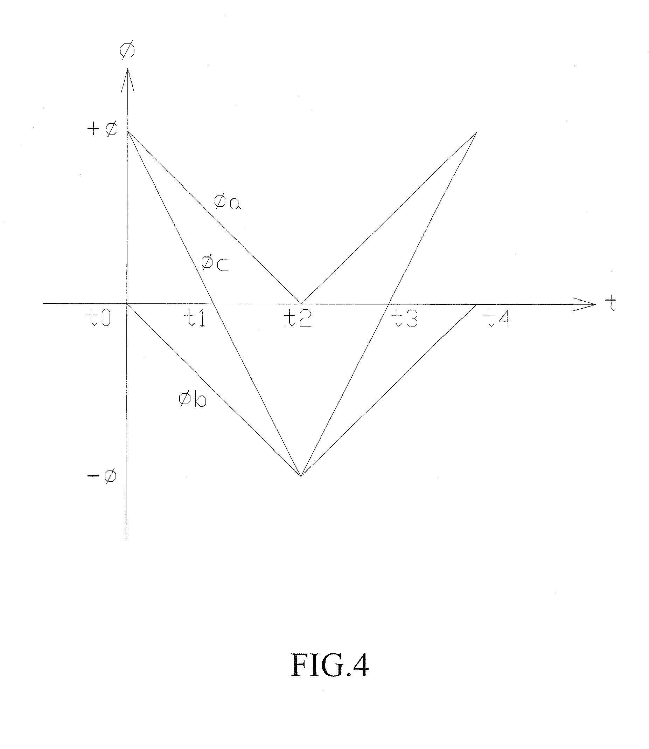

To more clearly describe the change of the magnetic flux inside the induction coils 26, reference is now made to FIG. 4, which shows a rectangular coordinate system in which the axis of ordinate indicates magnetic flux (ϕ) and the axis of abscissa indicates time (t), symbol ϕa indicates the curve of magnetic flux direction 37a (magnetic flux) of FIG. 3A, ϕb indicates the curve of magnetic flux direction 38b (magnetic flux) of FIG. 3B, and ϕc is the sum of the two and is the curve representing the resultant magnetic flux direction. When the mover 23 is at the position shown in FIG. 3A, time is in the point of to or t₄, and when it is moved to the position shown in FIG. 3B, time is in the point of t₂. It can be observed from the drawing that ϕa and ϕb are of opposite directions and thus, ϕc is +ϕ in time points to and t₄, zero in time points t₁ and t₃, and -ϕ in time point t₂, showing a change from +ϕ to -ϕ and then from -ϕ back to +ϕ. In other words, both the magnitude and the direction of the magnetic flux in the magnetic circuit of coil 26 change.

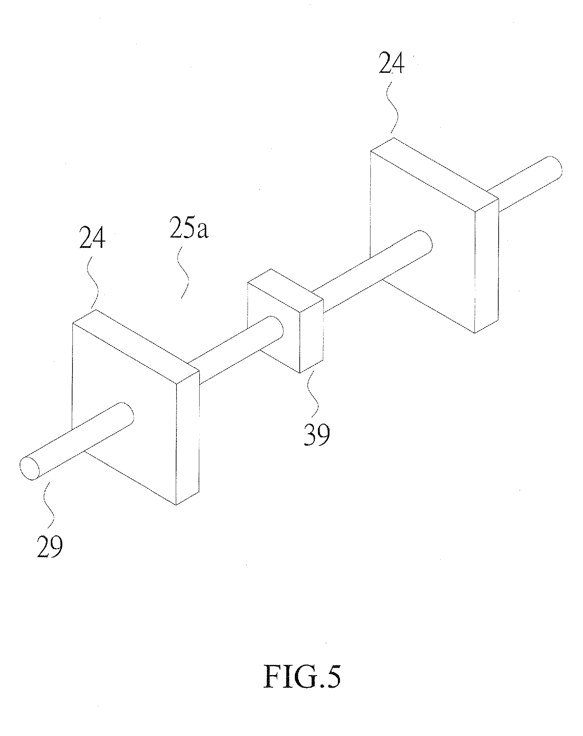

Reference is now made to FIG. 5, as well as FIG. 2, wherein the plastic plates 25 are replaced by gaskets 39 or pads. The gaskets 39 can be square or circular and have a thickness approximately corresponding to the silicon steel plates 24 but have a much smaller size and can be made of silicon steel plates or any other rigid insulation material. When the gaskets are sequentially fit and coupled to a shaft 29, they form air gaps 25a, which are exaggerated in the drawing simply for illustration purpose, yet it is understood that they are just of a dimension corresponding to the thickness of the gaskets 39, namely being as thick as the plastic plates 25. In this way, material and weight are saved.

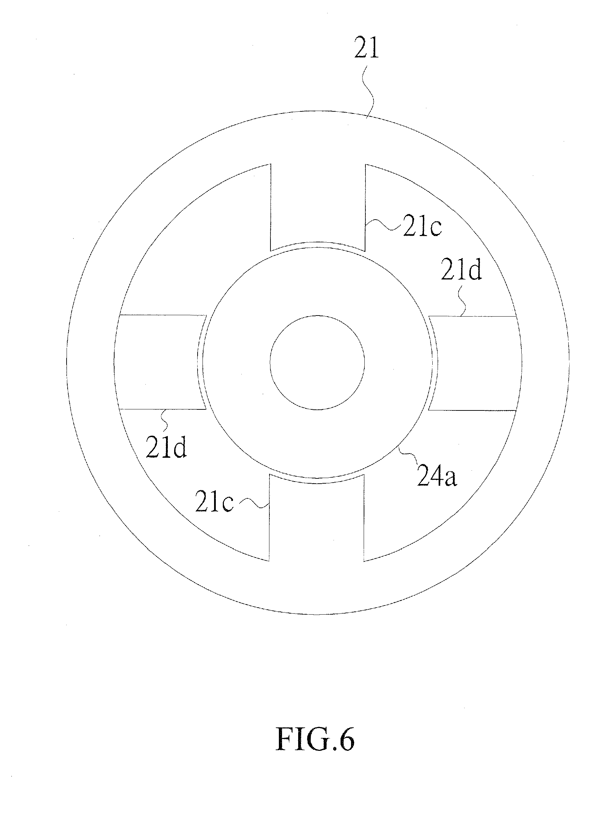

The stator and rotor of the square linear generator can be of any desired shapes, and for a circular one, a front view is shown in FIG. 6, in which stator silicon steel plates 21c, 21d and mover silicon steel plates 24a are respectively corresponding to the stator silicon steel plates 21a, 21b and the mover silicon steel plates 24 of FIG. 2, but just with the shape changed to circle. Plastic plates are also made circular in this case.

Referring to FIG. 7, a rotary generator according to a known technique is shown, comprising a stator 40, a rotor 41, and magnetic poles 42. Excitation coils 43 are wound around the magnetic poles 42 and connected to an excitation power source 44. When the rotor 41 rotates, an induction coil 45 wound around the rotor 41 cuts the lines of magnetic force to thereby induce and supply a voltage.

Each time the generator makes a full turn of rotation, the magnetic flux changes two times, or four times for a four pole arrangement. The greater the number of the poles is, the fasters the magnetic flux changes, the higher the voltage induced, and the greater the output power supplied. However, as can be observed from FIG. 7, since the magnetic poles 42 have to carry the excitation coils 43 wound thereon, the number of magnetic poles can only be of a limited number. Further, if the number of magnetic poles arranged is large, the width of the magnetic poles get slim, leading to lowering of magnetic flux. Consequently, the conventional power generators, which are currently available, are incapable of further increasing the power-to-volume ratio.

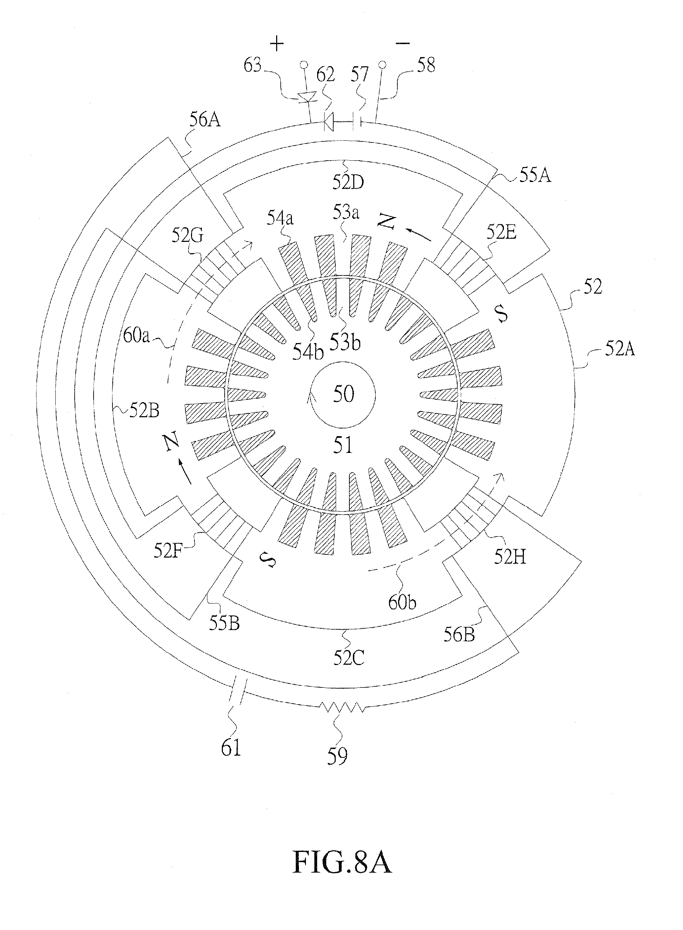

Reference is now made to FIG. 8A, which is a front view of the present invention as applied to a rotary generator, wherein the generator comprises a stator 52 forming eight (8) sections of stator magnetic path 52A, 52B, 52C, 52D, 52E, 52F, 52G, 52H. A rotor 51 has an outer circumference that is composed of alternately arranged silicon steel plates 53b and air gaps 54b (shading portions), which are of substantially the same width. Four sections 52A, 52B, 52C, 52D of the stator magnetic paths have inner circumferences each of which is composed of alternatively arranged silicon steel plates 53a and air gap 54a (shading portions), which are of substantially the same width. Sections 52E, 52F are respectively wound with excitation coils 55A, 55B, which are powered by an external-excitation power source 57, or are alternatively formed of magnets in combination with a self-excitation circuit 58, or further alternatively comprise only self-excitation. Diodes 62, 63 function to prevent shorting between the external excitation and self-excitation power source. The stator magnetic paths 52G, 52H are respectively wound with induction coils 56A, 56B that are connected to a load 59.

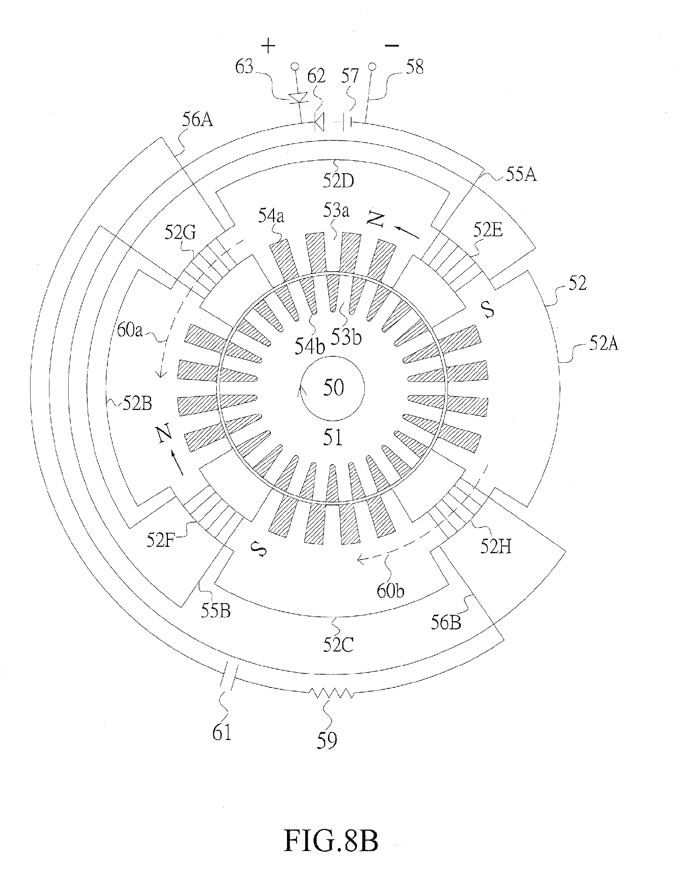

The silicon steel plates of the stator magnetic paths 52A, 52B are angularly shifted away from the silicon steel plates of the rotor 51, while silicon steel plates of the stator magnetic paths 52C, 52D are in alignment with the rotor silicon steel plates, whereby the N pole of the lines of magnetic flux induced by the excitation coil 55A travels through the stator magnetic path 52D to the rotor, and then further from the stator magnetic path 52C through the coil 56B on the stator magnetic path 52H to get back to the S pole, of which the direction of magnetic flux is designated at 60b (indicated by arrow of phantom line), while the N pole of the lines of magnetic flux induced by the excitation coil 55B travels through the coil 56A wound on the stator magnetic path 52G and the stator magnetic path 52D to the rotor, and then further through the stator magnetic path 52C to get back to the S pole, of which the direction of magnetic flux is designated at 60a (indicated by arrow of phantom line). The directions of the lines of magneto motive - force for the magnetic flux directions 60a, 60b are opposite to each other. When the rotor 51 rotates by a distance of the width of one silicon steel plate 53b, the situation is changed to that shown in FIG. 8B, where the silicon steel plates of the stator magnetic paths 52A, 52B are in alignment with the silicon steel plates of the rotor 51, while the silicon steel plates of the stator magnetic paths 52C, 52D are angularly shifted away from the silicon steel plates of the rotor 51, whereby the N pole of the lines of magnetic flux induced by the excitation coil 55A travels through the coil 56A and the stator magnetic paths 52B, 52A to get back to the S pole, of which the direction of magnetic flux is designated at 60a (arrow of phantom line) that is exactly opposite to that of the previous drawing, while the N pole of the lines of magnetic force induced by the excitation coil 55B travels through the stator magnetic paths 52B, 52A, the coil 56B, and the stator magnetic path 52C to get back to the S pole, of which the direction of magnetic flux is designated at 60b (arrow of phantom line) that is exactly opposite to that of the previous drawing. Consequently, the magnetic flux in the coils 56A, 56B varies in both magnitude and direction thereof, inducing a voltage, which supplies electrical power to the load 59. A capacitor 61 is provided to improve power factor. Reference numeral 50 indicates a rotation shaft.

For silicon steel plates 53a or 53b having a very small width, for example 0.3cm, with the assumption that the rotor 51 has a diameter of 10cm, which corresponds t approximately 100 intervals (including 50 silicon steel plates 53b and 50 air gaps 54b), when the rotor 51 takes a full turn of rotation, the magnetic flux changes 100 times, whereby with the same number of windings, it induces a voltage ten time greater than that induced by the conventional generator (with an assumption of having 10 poles) of FIG. 7 and the power-to-volume ratio is greater by 100 times.

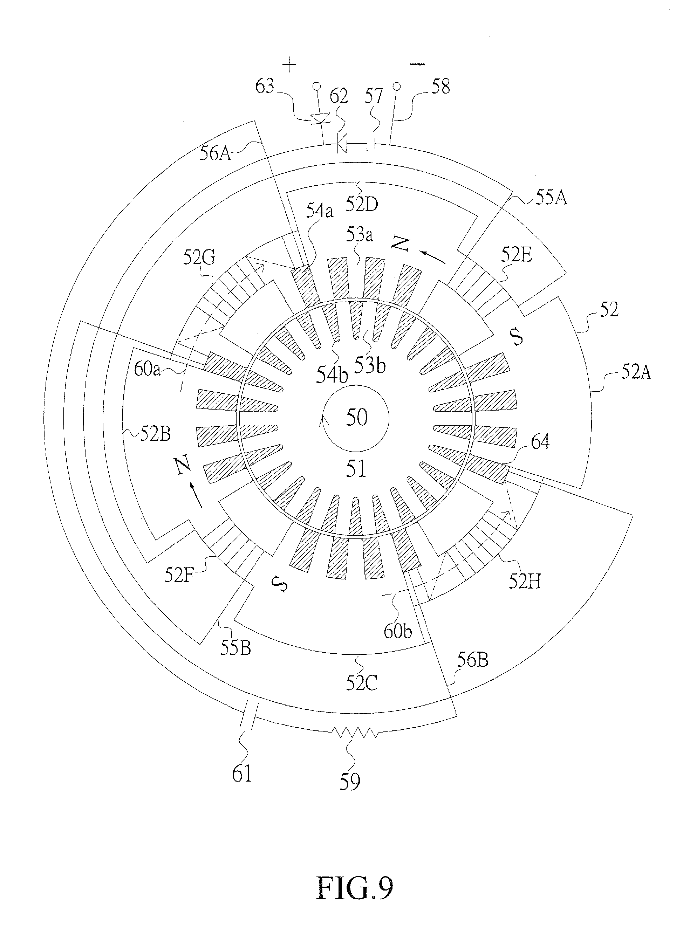

The induction coils 56A, 56B can added to be wound around the air gaps, such as wound around air gap 64 shown in FIG. 9, to increase the number of turns of the coils and thus further increasing the power to-volume ratio.

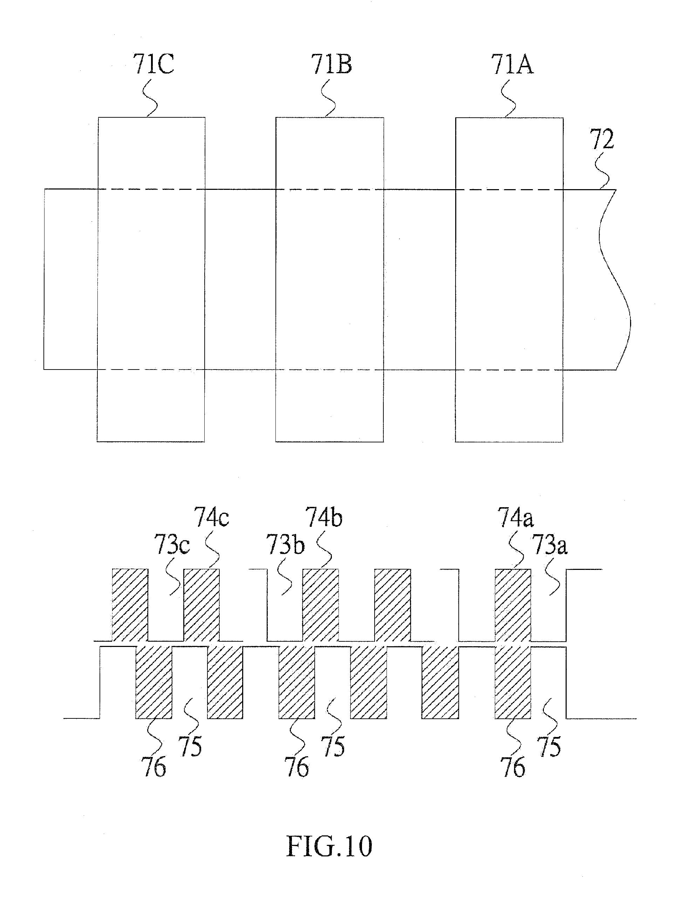

Referring to FIG. 10, the power generator according to the present invention can be embodied as a multi-phase configuration, which is constructed by a cascade arrangement of combination of three of the stator of FIG. 8A, respectively designated at 71A, 71B, 71C, with a common rotor 72 to form a three-phase generator as shown in FIG. 10. The construction will be explained with reference to the lower half drawing of FIG. 10, in which silicon steel plates 73a are silicon steel plates of a magnetic path of the stator 71A, and similarly, silicon steel plates 73b are silicon steel plates of a magnetic path of the stator 71B and silicon steel plates 73c are silicon steel plates of a magnetic path of the stator 71C with air gaps thereof being respectively indicated at 74a, 74b, 74c. Silicon steel plates75 are silicon steel plates of the rotor 72 having air gaps indicated at 76. When the silicon steel plates 73a of the first stator 71A are in alignment with the silicon steel plates75, the silicon steel plates 73b of the second stator 71B has only 1/3 portion thereof aligning with the silicon steel plates75, meaning a lag of 120° and the silicon steel plates73c of the third stator 71C still needs to move 1/3 interval before being set in complete alignment with the silicon steel plates75, namely lagging by 240°. When the three sets of generator make outputs at the same time, the circuit can be connected in a Y-type or a delta type arrangement by which a three-phase power output is supplied. In a similar way, a three-phase linear generator can also be constructed.

In summary, the present invention provides a power generator, which provides a greater power output per unit volume than the conventional power generators under the same moving speed or rotational speed of prime mover.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A power generator with high power-to-volume ratio comprising a plurality of silicon steel plates and air gaps or plastic plates, which are alternately arranged to form adjacent magnetic paths of a stator and a mover or a rotor of a linear mover generator or a rotary generator and which have intervals (which are defined by thickness or width of the silicon steel plates or the air gaps or the plastic plates) that are set to be very small, whereby when the mover or the rotor take a movement or rotation by one interval, magnetic flux induced in a magnetic path of the stator around which an induction coil is wound changes magnitude and direction thereof so that through quick changes, the induction coil induces a higher voltage and thus significantly increases power-to-volume ratio of the generator.

2. The power generator with high power-to-volume ratio according to claim 1, wherein the magnetic flux is generated by a permanent magnet mounted in the stator.

3. The power generator with high power-to-volume ratio according to claim 1, wherein the magnetic flux is generated by an external-excitation power source or through self-excitation, or by an external-excitation power source in combination with self-excitation of which an excitation circuit is mounted to the stator.

4. The power generator with high power-to-volume ratio according to claim 1, wherein the magnetic flux is generated by a permanent magnet in combination with self-excitation, the permanent magnet and an excitation circuit being mounted to the stator.

5. The power generator with high power-to-volume ratio according to claim 1, wherein the magnetic path is a combination of two lines of magneto motive - force respectively in a clockwise direction and a counterclockwise direction, each comprising an exciter and an induction coil, whereby when the silicon steel plates of the stator of one magnetic path are in alignment with the silicon steel plates of the rotor, the other magnetic path is off alignment, so that the magnetic flux in the aligned condition increases in magnitude, while the magnetic flux in the off alignment condition decreases in magnitude, a combination of the two inducing variation of magnitude and direction of the magnetic flux induced in the magnetic path of the induction coil.
